# EUROPEAN PATENT APPLICATION

(11) **EP 4 811 852 A1**
(43) Date of publication of application: **23.09.2026**
(21) Application number: 24896311.8
(22) Date of filing: 18.11.2024
(51) Int. Cl.: H04W 24/08

(54) **MEASUREMENT METHOD, APPARATUS, DEVICE, AND STORAGE MEDIUM**

(30) Priority: 29.11.2023 CN 202311618895
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Jingjing, Beijing 100053 (CN)
(74) Representative: Novagraaf Technologies
(86) International application number: PCT/CN2024/132694
(87) International publication number: WO 2025/113220

(57) **Abstract**

Disclosed in the present disclosure are a measurement method, an apparatus, a device, and a storage medium. The method comprises: a terminal executes at least one among the following operations: performing first measurement, wherein the first measurement comprises at least one among the following: measurement during a connection setup process, measurement during a connection resume process, measurement after receiving a page, measurement after sending a random access preamble, measurement before receiving a connection measurement configuration, inter-frequency measurement, inter-system measurement, and measurement of a measurement target; in a connected state, continuing the first measurement, an idle state measurement, or a deactivated state measurement; and sending first information to a network, wherein the first information comprises at least one among the following: indication information of an available measurement result, indication information of a valid measurement result, a timestamp, and a measurement result.

## Description

### CROSS-REFERENCE TO RELATED APPLICATION

The present disclosure is based on and claims priority to Chinese Patent Application No. 202311618895.0, filed on November 29, 2023, the contents of which are hereby incorporated by reference in its entirety.

### TECHNICAL FIELD

The present disclosure relates to the technical field of wireless communications, and in particular to a method, an apparatus, and a device for measurement, and a storage medium.

### BACKGROUND

At present, a network may instruct a user equipment (UE) to measure candidate frequencies in a non-connected state (which includes an idle state and an inactive state), and to report measurement results to the network after the UE enters a connected state, so that it is possible to perform a fast setup of a secondary cell (SCell) or a secondary cell group (SCG). However, measurements of the frequencies for SCell or SCG setup in the non-connected state can only be carried out within duration of a certain timer, which starts when the UE enters the non-connected state and stops after the UE completes the measurements of frequencies for SCell or SCG setup. If the UE enters the connected state after a long period of time, the measurement results obtained may have become invalid in some scenarios, which cannot reflect the actual channel condition, resulting in issues with the SCell or SCG configured by the network based on the measurement results, and affecting the system performance. In addition, the network is also uncertain about when the measurement results reported by the UE were measured, and whether these measurement results can be used as a reference for SCell or SCG setup.

### SUMMARY

In view of this, embodiments of the present disclosure desire to provide a method, an apparatus, and a device for measurement, and a storage medium.

In a first aspect of the present disclosure, a measurement method applied to a user equipment (UE) is provided, which includes that: performing at least one of the following operations: performing a first measurement; continuing the first measurement, an idle-state measurement, an inactive-state measurement in a connected state; or transmitting first information to a network. The first measurement includes at least one of the following: a measurement during connection setup; a measurement during connection resume; a measurement after receiving a paging; a measurement after transmitting a random access preamble; a measurement before receiving a connection measurement configuration; an inter-frequency measurement; an inter-RAT measurement; or a measurement of a measurement object (MO). The first information includes at least one of the following: indication information of available measurement results; indication information of valid measurement results; a timestamp; or measurement results.

Further, according to at least one embodiment of the present disclosure, the performing the first measurement includes: performing the first measurement if at least one of the following conditions is met: a first result is invalid; or, second information transmitted by the network instructs the UE to perform the first measurement.

Further, according to at least one embodiment of the present disclosure, the first result includes: a result of a measurement for cell reselection; and a result of an idle-state carrier-aggregation (CA) or dual-connectivity (DC) measurement. Further, according to at least one embodiment of the present disclosure, the measurement results are valid if at least one of the following conditions is met: the measurements are performed within a first duration before reporting; the measurements are performed within the first duration before MSG1 transmission; a change in reference-signal-received-power (RSRP) is less than or equal to a first threshold; a change in reference-signal-received quality (RSRQ) is less than or equal to a second threshold; a change in signal-to-interference-plus-noise ratio (SINR) is less than or equal to a third threshold; or the measurement results satisfy measurement accuracy requirement.

Further, according to at least one embodiment of the present disclosure, the measurement results are invalid if at least one of the following conditions is met: a time interval between reporting and measurement exceeds a first duration; a change in RSRP is greater than or equal to a first threshold; a change in RSRQ is greater than or equal to a second threshold; a change in SINR is greater than or equal to a third threshold; or the measurement results do not satisfy measurement accuracy requirement.

Further, according to at least one embodiment of the present disclosure, the method further includes: receiving second information transmitted by the network, the second information including at least one of a frequency, a cell identifier, an SSB index, an SSB period, or an SSB-based measurement timing configuration (SMTC) period for performing the first measurement.

Further, according to at least one embodiment of the present disclosure, the method further includes: receiving third information transmitted by the network, the third information including at least one of: a frequency band in which the first measurement is to be performed; or frequencies to be measured in the frequency band.

Further, according to at least one embodiment of the present disclosure, the method further includes: transmitting fourth information to the network, the fourth information including at least one of: a number of samples of the first measurement; or, a number of samples of a first result.

Further, according to at least one embodiment of the present disclosure, the method further includes: transmitting fifth information to the network, the fifth information including indication information for performing the first measurement, the idle-state measurement, and the inactive-state measurement in a connected state.

Further, according to at least one embodiment of the present disclosure, the operation of continuing the first measurement, the idle-state measurement, and the inactive-state measurement in the connected state includes one of the following: when the measurement object includes a frequency of the first measurement, the UE continues the first measurement in the connected state; when the measurement object includes a frequency of the first measurement, the UE continues an idle-state CA or DC measurement in the connected state; when the measurement object includes a frequency for cell reselection, the UE continues the idle-state measurement in the connected state; or when the measurement object includes a frequency for cell reselection, the UE continues the inactive-state measurement in the connected state.

Further, according to at least one embodiment of the present disclosure, the operation of transmitting the first information to the network includes one of the following: transmitting the first information during connection setup; transmitting the first information during connection resume; transmitting the first information in the connected state; or, transmitting the first information after receiving information that the network requests the UE to report the measurement results.

Further, according to at least one embodiment of the present disclosure, the method further includes: receiving sixth information transmitted by the network; the sixth information is used to indicate a resource allocation for the UE between the first measurement and a second measurement performed by the UE in the connected state.

Further, according to at least one embodiment of the present disclosure, the method further includes: transmitting seventh information to the network, the seventh information indicating at least one of the following: whether the UE supports the measurement during connection setup; whether the UE supports the measurement during connection resume; whether the UE supports the measurement after receiving the paging; whether the UE supports the measurement after transmitting the random access preamble; whether the UE supports the measurement before receiving the connection measurement configuration; whether the UE supports the continuing the first measurement, the idle-state measurement, and the inactive-state measurement in the connected state; or whether the UE supports measurement validation.

Further, according to at least one embodiment of the present disclosure, the method further includes: reporting valid measurement results; where the measurement results are valid when at least one of the following conditions is met: the measurement results satisfy measurement accuracy requirement; the measurements are performed within a first duration before MSG1 transmission; the change in RSRP is less than or equal to the first threshold; the change in RSRQ is less than or equal to the second threshold; or the change in SINR is less than or equal to the third threshold.

In a second aspect of the present disclosure, a measurement method applied to a network device is provided. The method includes: receiving first information transmitted by a UE; where the first information includes at least one of: indication information of available measurement results; indication information of valid measurement results; a timestamp; or measurement results.

Further, according to at least one embodiment of the present disclosure, the method further includes: transmitting second information to the UE, the second information including at least one of: a frequency, a cell identifier, an SSB index, an SSB period, or an SMTC period for performing a first measurement.

Further, according to at least one embodiment of the present disclosure, the method further includes: transmitting third information to the UE, the third information including at least one of: a frequency band in which the first measurement is to be performed; or, a frequency (or frequencies) to be measured in the frequency band.

Further, according to at least one embodiment of the present disclosure, the method further includes: receiving fourth information transmitted by the UE, the fourth information including at least one of: a sample number of the first measurement; or, a sample number of a first result.

Further, according to at least one embodiment of the present disclosure, the method further includes: receiving fifth information transmitted by the UE, the fifth information including indication information that the first measurement, the idle-state measurement, and the inactive-state measurement are performed in a connected state.

Further, according to at least one embodiment of the present disclosure, the operation of receiving the first information transmitted by the UE includes one of the following: receiving the first information during connection setup; receiving the first information during connection resume; receiving the first information in the connected state; or, receiving the first information after the UE receives information that a network requests the UE to report the measurement results.

Further, according to at least one embodiment of the present disclosure, the method further includes: transmitting sixth information to the UE; the sixth information is used to indicate a resource allocation for the UE between the first measurement and a second measurement performed by the UE in a connected state.

Further, according to at least one embodiment of the present disclosure, the method further includes: receiving seventh information transmitted by the UE, the seventh information indicating at least one of: whether the UE supports a measurement during connection setup; whether the UE supports a measurement during connection resume; whether the UE supports a measurement after receiving a paging; whether the UE supports a measurement after transmitting a random access preamble; whether the UE supports a measurement before receiving a connection measurement configuration; whether the UE supports continuing a first measurement, an idle-state measurement, and an inactive-state measurement in a connected state; or whether the UE supports measurement validation.

Further, according to at least one embodiment of the present disclosure, the method further includes: receiving valid measurement results; where the measurement results are valid when at least one of the following conditions is satisfied: the measurement results satisfy the measurement accuracy requirement; the measurements are performed within a first duration before MSG1 transmission; a change in RSRP is less than or equal to a first threshold; a change in RSRQ is less than or equal to a second threshold; or, a change in SINR is less than or equal to a third threshold. At least one embodiment of the present disclosure provides a measurement apparatus, which includes a processing module for performing at least one of the following operations: performing a first measurement; continuing the first measurement, an idle-state measurement, and an inactive-state measurement in a connected state; or transmitting first information to a network. The first measurement includes at least one of: a measurement during connection setup; a measurements during connection resume; a measurement after receiving a paging; a measurement after transmitting a random access preamble; a measurement before receiving a connection measurement configuration; an inter-frequency measurement; an inter-RAT measurement; or a measurement of a measurement object. The first information includes at least one of: indication information of available measurement results; indication information of valid measurement results; a timestamp; or measurement results.

In a third aspect of the present disclosure, a measurement apparatus is provided, including: a receiving module configured to receive first information transmitted by a UE. The first information includes at least one of: indication information of available measurement results; indication information of valid measurement results; a timestamp; or measurement results.

In a fourth aspect of the present disclosure, a UE is provided, which includes: a processor and a memory for storing a computer program executable by the processor, where the processor is configured to execute any of the steps of the method on the UE side when the computer program is executed.

In a fifth aspect of the present disclosure, a network device is provided, which includes: a processor and a memory for storing a computer program executable by the processor, where the processor is configured to execute any of the steps of the method on the network device side when the computer program is executed.

In a sixth aspect of the present disclosure, a storage medium is provided, on which a computer program is stored, and when the computer program is executed by a processor, the steps of any of the above methods are implemented.

The embodiments of the present disclosure provide a method, an apparatus and a device for measurement, and a storage medium. The method includes that: a UE performs at least one of the following operations: performing a first measurement, where the first measurement includes at least one of: a measurement during connection setup, a measurement during connection resume, a measurement after receiving a paging, a measurement after transmitting a random access preamble, a measurement before receiving a connection measurement configuration, an inter-frequency measurement, an inter-RAT measurement, or a measurement of a measurement object (MO); continuing the first measurement, an idle-state measurement, and an inactive-state measurement in a connected state; or transmitting first information to a network, where the first information includes at least one of: indication information of available measurement results, indication information of valid measurement results, a time stamp, or measurement results. The transmission may also be described as a reporting.

By adopting the technical solutions provided by the embodiments of the present disclosure, the UE performs at least one of the following operations: performing a first measurement; continuing the first measurement, an idle-state measurement, and an inactive-state measurement in a connected state; or transmitting first information to a network. First, the UE performs a first measurement. The first measurement may also be described as an enhanced measurement, or as an additional measurement. The first measurement is used for SCell or SCG setup. The first measurement includes at least an additional measurement based on the existing idle-state/inactive-state measurement performed by the UE, which can enable the measurement closer to the timing of being used, thereby improving effectiveness. Second, continuing the first measurement, the idle-state measurement, and the inactive-state measurement in the connected state can ensure the validity and timeliness of the measurement. Thirdly, the first information is sent to the network to indicate whether the measurement results are valid or not during reporting, which can assist the network in better utilizing the measurement results reported by the UE, thus ensuring the validity and timeliness of the measurement.

### BRIEF DESCRIPTION OF THE DRAWINGS

FIG. 1 is a schematic flowchart of a measurement method provided by an embodiment of the present disclosure.
FIG. 2 is a schematic flowchart of another measurement method provided by an embodiment of the present disclosure.
FIG. 3 is a schematic structural diagram of a measurement apparatus provided by an embodiment of the present disclosure.
FIG. 4 is a schematic structural diagram of another measurement apparatus provided by an embodiment of the present disclosure.
FIG. 5 is a schematic structural diagram of a user equipment (UE) provided by an embodiment of the present disclosure.
FIG. 6 is a schematic structural diagram of a network device provided by an embodiment of the present disclosure.

### DETAILED DESCRIPTION

Before introducing technical solutions of embodiments of the present disclosure, the related technologies will be introduced first.

In the related technologies, setup of a secondary cell (SCell) or a secondary cell group (SCG) is performed in a connected state, including: configuring to-be-measured frequency by a network, performing measurement by a user equipment (UE), reporting a measurement result, and configuring the SCell or SCG by a network.

In the related technologies, in order to reduce a setup time of the SCell or SCG, the network may instruct the UE to measure candidate frequencies in a non-connected state (where the non-connected state includes an idle state and an inactive state), and to report measurement results after entering the connected state, so that it is possible to quickly set up the SCell or SCG. However, the measurement of the candidate frequencies for the SCell or SCG setup in the non-connected state can only be performed within duration of a certain timer that starts when the UE enters the idle state or the inactive state. This method has a timeliness problem. For example, after the timer expires (that is, after the UE measures the candidate frequencies for SCell or SCG setup), if it enters the connected state after a long period of time, for an scenario where a channel changes rapidly (i.e., a high-speed mobile UE or a FR2 scenario), the previous measurement results may have become invalid and cannot reflect the actual channel condition, which will lead to issues with the SCell or SCG configured by the network based on the measurement results and affect the system performance. In addition, the network side is uncertain about when the measurement results reported by the UE were measured, and whether these measurement results can be used as a reference for SCell or SCG setup.

Based on this, in an embodiment of the present disclosure, the UE performs at least one of the following operations: performing a first measurement, where the first measurement includes at least one of: a measurement during a connection setup procedure, a measurement during a connection resume procedure, a measurement after receiving a paging, a measurement after transmitting a random access preamble, a measurement before receiving a connection measurement configuration, an inter-frequency measurement, an inter-RAT measurement, or a measurement of a measurement object (MO); continuing, in a connected state, the first measurement, an idle-state measurement, and an inactive-state measurement; or transmitting first information to the network, where the first information includes at least one of the following: indication information of available measurement results, indication information of valid measurement results, a timestamp, or measurement results. The "transmitting" may also be described as "reporting".

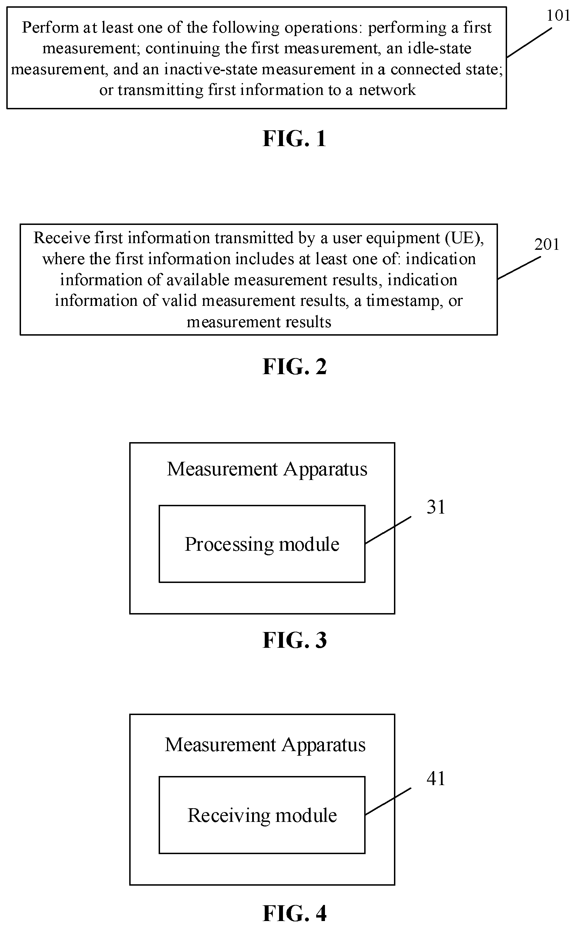

Referring to FIG. 1, FIG. 1 is a schematic flowchart of a measurement method provided by an embodiment of the present disclosure, which is applied to a UE. As shown in FIG. 1, the method includes an operation 101.

In 101: performing at least one of the following operations: performing a first measurement; continuing the first measurement, an idle-state measurement and an inactive-state measurement in a connected state; or transmitting first information to a network.

As an example, the first measurement includes at least one of the following: a measurement during a connection setup procedure; a measurement during a connection resume procedure; a measurement after receiving a paging; a measurement after transmitting a random access preamble; a measurement before receiving a measurement configuration; an inter-frequency measurement; an inter-RAT measurement; or a measurement of a MO.

As an example, the first information includes at least one of the following: indication information of available measurement results; indication information of valid measurement results; a timestamp; or measurement results.

As an example, the first measurement may also be described as an additional measurement, or as an enhanced measurement. In the present disclosure, "additional" and "enhanced" means that, relative to an idle-state measurement, an inactive-state measurement, and an early measurement, the first measurement may be a measurement that continues on the basis of the idle-state measurement, the inactive-state measurement, and the early measurement, or may be independent of the idle-state measurement, the inactive-state measurement, and the early measurement. Alternatively, the first measurement may be described as a measurement for secondary cell (SCell) or SCG setup, or as a measurement for an enhanced SCell or SCG setup, or as a measurement for a latency-reduced SCell or SCG setup, or as a measurement for fast carrier aggregation (CA) or dual connectivity (DC), or as an idle-state fast CA or DC measurement, or as a measurement for fast CA or DC setup, or as an enhanced CA or DC measurement, or as an enhanced early measurement reporting, or as a measurement for fast CA/DC setup. Measurement in the present disclosure may also be described as measurement reporting. The measurement for SCell or SCG setup includes FR1 (frequency range 1) SCell or SCG setup measurement, and FR2 (frequency range 2) SCell or SCG setup measurement. The first measurement includes searching (or detecting) and/or measuring (or described as a reference signal receiving power (RSRP) measurement, a reference signal receiving quality (RSRQ) measurement, a signal to interference plus noise ratio (SINR) measurement) and/or acquiring a time of a synchronization signal block (SSB) index. The carrier aggregation (CA) measurement includes an idle-state CA measurement and/or an inactive-state CA measurement. The UE performing CA measurement includes that the UE measures candidate frequencies or cells for carrier aggregation, where the frequencies include inter-frequency and/or inter-RAT frequencies, and the cells include inter-frequency and/or inter-RAT cells. The DC measurement includes an idle-state DC measurement and/or an inactive-state DC measurement. The UE performing DC measurement includes that the UE measures candidate frequencies or cells for DC, where the frequencies include inter-frequency and/or inter-RAT frequencies, and the cells include inter-frequency and/or inter-RAT cells.

As an example, the first measurement is used for SCell or SCG setup (in relation to CA or DC).

As an example, the first measurement includes at least an additional measurement (e.g., a measurement performed after a timer expires) performed on top of an existing idle-state/inactive-state measurement conducted by the UE (e.g., a cell reselection measurement, an idle-state/inactive-state CA/DC measurement performed within a duration of the timer), which may enable the measurement to be closer in time to when it is actually used, thereby improving effectiveness.

As an example, the network may also be described as a network-side device including a base station (e.g. gNB, eNB, aNB), a network administrator, and the like.

As an example, the measurement after receiving the paging may also be described as a measurement whose starting point is the reception of the paging, or a measurement initiated by the UE after receiving the paging.

As an example, the measurement after transmitting the random access preamble may also be described as a measurement whose starting point is the transmission of the random access preamble, or as a measurement initiated by the UE after transmitting the random access preamble. The random access preamble may also be described as a preamble of a random access channel, or as MSG1. Further, the measurement after transmitting the random access preamble may further include a measurement after transmitting a first random access preamble.

As an example, the measurement before receiving the connection measurement configuration may also be described as a measurement before receiving a first radio resource control (RRC) reconfiguration message. The measurement prior to receiving the connection measurement configuration may be understood to mean that an ending point of the measurement is a time at which the first RRC reconfiguration message is received, i.e., the UE stops the measurement upon receiving the connection measurement configuration.

As an example, the measurement of MO may also be described as a connected-state measurement, including a measurement carried over from an idle state to a connected state, and a measurement carried over from an inactive state to the connected state.

As an example, the available measurement results may also be described as existence of measurement results. The indication information of the available measurement results may also be described as indication information indicating the existence of the measurement results, or as indication information of whether the measurement results are available. Considering factors such as channel state and reference signal strength, the UE may not be able to perform measurements on some frequencies/cells, or the measurement results may be low (for example, below a certain threshold). Through the indication information, the network can be assisted to know whether the UE has measurement results and which measurement results are available, thereby facilitating subsequent decisions on whether to trigger measurement reporting and how to configure reporting resources. Specifically, for example, a value of a corresponding bit in the indication information of the available measurement results is 1 or TRUE, which indicates that there are available measurement results. In other examples, the availability may be indicated per frequency (i.e., whether a measurement result is available for each frequency), the availability may be indicated per cell (i.e., whether a measurement result is available for each cell), the availability of measurement results for multiple frequencies may be indicated by one bit, or the availability of measurement results for multiple cells may be indicated by one bit.

As an example, the indication information of the valid measurement results may also be described as information indicating that the measurement results are valid, or as information indicating whether the measurement results are valid.

Here, considering that there may be a certain time interval between the UE performing the measurements and reporting the measurement results, and it is likely that the measurement results has been invalidated, the present disclosure can assist the network in determining whether the measurement results reported by the UE are still valid by introducing the indication information of the valid measurement results, so as to facilitate subsequent determination of whether to use the reported measurement results for SCell/SCG configuration. Specifically, for example, the corresponding bit value of the indication information of the valid measurement results is 1 or TRUE, which indicates that the measurement results are valid. In other examples, the validity may be indicated per frequency (i.e., whether the measurement result for each frequency is valid), the validity may be indicated per cell (i.e., whether the measurement result for each cell is valid), the validity of measurement results of multiple frequencies may be indicated by one bit, or the validity of measurement results of multiple cells may be indicated by one bit.

As an example, the timestamp is a timestamp of a measurement result, or is described as an indication of when the measurement result is measured when the UE reports the measurement result, so as to facilitate the network to determine whether the reported measurement result is valid and available.

As an example, the measurement results include at least one of RSRP, RSRQ, or SINR. The measurement results in an embodiment of the present disclosure include measurement results of the first measurement and/or a first result, the first result including measurement results in idle state and/or inactive state, such as a measurement result for cell reselection, a measurement result for CA/DC (e.g. measurement report for fast CA/DC setup), or the like.

As an example, the advantage of performing the first measurement is that: in the related technologies, the CA or DC measurement in the idle state (or described as early measurement reporting) is performed within a duration of a timer that starts when the UE enters the idle state or the inactive state; this method has a timeliness problem, for example, after the timer expires (that is, after the UE measures the frequencies for SCell or SCG setup), if it enters the connected state after a long period of time, for a scenario where the channel changes rapidly (high-speed mobile UE or FR2 scenario), the previous measurement results may have become invalid and cannot reflect the actual channel condition, resulting in issues with SCell or SCG configured by the network based on the measurement results, which affects the system performance. In addition, the network side is also uncertain about when the measurement results reported by the UE were measured, and whether the measurement results can be used as a reference for SCell or SCG setup. The first measurement is performed close to the connection setup procedure, and can be combined with earlier measurement in the idle state or the inactive state, or even extended into the connected state to continue the measurement, which can enable the measurement to be closer to the timing of being used, improve the validity of the measurement result, and improve the performance of SCell or SCG setup, including reducing a setup latency and improving a setup success rate.

By way of example, performing the first measurement, idle-state measurement, or inactive-state measurement in the connected state may also be described as the first measurement, the idle-state measurement, and the inactive-state measurement being extended into (or carried over into) the connected state, or as continuing to perform the first measurement, the idle-state measurement, and the inactive-state measurement in the connected state. This scheme improves the validity and timeliness of the measured results.

As an example, in the related technologies, the idle-state measurements or the inactive-state measurements (the measurement results of which are referred to as the first result in the embodiments of the present disclosure), including measurements for cell reselection and measurements for CA or DC (the measurements for CA or DC can also be described as early measurement reporting), does not indicate the availability and validity of the measurement results, and the network cannot know when the measurement results reported by the UE were measured, whether the measurement results are still valid, and whether the measurement results can be used as a reference for SCell or SCG configuration. Transmitting the first information can provide the network with the availability and validity of the measurement results, assist the network in determining how to use the measurement results from the UE, and assist the network in better configuration of SCell or SCG.

In some embodiments, the operation of performing the first measurement includes that: performing the first measurement when at least one of the following conditions is satisfied: a first result is invalid; or second information transmitted by the network instructs the UE to perform the first measurement.

In some embodiments, the first result includes: a result of a cell reselection measurement, and a result of an idle-state CA or DC measurement.

As an example, the first result is not a result of the first measurement. The first result including measurement results in idle state and/or inactive-state in the related technologies, including a measurement result for cell reselection, a measurement result for CA or DC (the measurement result for CA or DC may also be described as a measurement result of an early measurement reporting), or the like. The solution is that when the first result is invalid, it indicates that the current first result may be outdated or cannot represent the actual channel condition, and the first measurement is required to improve the validity and timeliness. If the first result is valid, the UE may not perform the first measurement, thereby reducing power consumption.

As an example, the UE may determine whether to perform the first measurement in one of the following ways:
in a first way: the UE determines whether the current measurement results are valid; when the current measurement results are valid, the UE does not perform the first measurement; when the current measurement results are not valid, the UE performs the first measurement; or,
in a second way: the UE receives second information sent by the network, the second information indicating whether the UE performs the first measurement; if the second information indicates to perform the first measurement, the UE performs the first measurement regardless of whether the first result is valid; if the second information indicates not to perform the first measurement, the UE will not perform the first measurement.

As an example, the UE performing the first measurement may include the following situations:
a first situation: the UE performs the first measurement and reports the measurement results to the network;
a second situation: the UE performs the first measurement, assesses/checks a validity of the measurement results, and reports the measurement results to the network. Optionally, the UE may further indicate the validity of the measurement results to the network;
a third situation: the network indicates whether the UE performs the first measurement, and when the UE is instructed to perform the first measurement, the UE performs the first measurement and reports the measurement results to the network;
a fourth situation: the network indicates whether the UE performs the first measurement, if the UE is instructed to perform the first measurement, the UE performs the first measurement, assesses/checks the validity of the measurement results, and reports the measurement results to the network, and optionally, the UE may further indicate the validity of the measurement results to the network.

In some embodiments, the measurement results are valid if at least one of the following conditions is met:
the measurements are performed within a first duration before reporting;
the measurements are performed within a first duration before MSG1 transmission;
a change in RSRP is less than or equal to a first threshold;
a change in RSRQ is less than or equal to a second threshold;
a change in SINR is less than or equal to a third threshold; or,
the measurement results satisfy measurement accuracy requirement.

As an example, the reporting may also be described as reporting of measurement results.

As an example, the MSG1 is a message 1 in a random access procedure, which may also be described as a preamble transmission.

As an example, a value of the first time may be configured by the network or may be predefined in a protocol. The value of the first time can be expressed in milliseconds, such as 5 ms.

As an example, the measurement results satisfying the measurement accuracy requirement includes that: the measurement results satisfy the measurement accuracy requirement at a measurement instance; and/or, the measurement results satisfy the measurement accuracy requirement at a reporting time. An instance at which the UE performs the measurements, a time at which the measurement results are reported, and a time at which the network receives the measurement results are different, especially since the measurement results must be transmitted through a channel to reach the network side, during which channel conditions may change, making it impossible to guarantee that the measurement results at the network receiving time can still meet the measurement accuracy requirement. However, the UE needs to meet the measurement accuracy at the measurement instance, and considering that an interval between the reporting time and the measurement instance may not be large, the measurement results at the reporting time may also be required to meet the measurement accuracy. The measurement accuracy includes an intra-frequency accuracy and an inter-frequency accuracy. From another dimension, the measurement accuracy also includes an absolute accuracy and a relative accuracy. The relative accuracy refers to a difference in RSRP/RSRQ/SINR measured from one cell compared with that measured from another cell (or described as the difference between the RSRP/RSRQ/SINR measured from one cell and the RSRP/RSRQ/SINR measured from another cell). The absolute accuracy refers to a difference between the measured RSRP/RSRQ/SINR and the actual (or described as ideal) RSRP/RSRQ/SINR. The measurement accuracy includes a range of the above-mentioned differences under certain conditions (e.g., signal-to-noise ratio (SNR), or signal-to-interference-to-noise ratio (SINR)).

As an example, a change in RSRP, RSRQ, or SINR being less than or equal to a certain threshold indicates that the channel changes slowly, and the measurement results have a long timeliness.

Specifically, "the change in RSRP is less than or equal to the first threshold" includes that a difference between two adjacent RSRP values is less than or equal to the first threshold, or a change in RSRP within a certain period of time is less than or equal to the first threshold. The first threshold may be configured by the network. "The change in RSRQ is less than or equal to the second threshold" includes that a difference between two adjacent RSRQ values is less than or equal to the second threshold, or a change in RSRQ within a certain period of time is less than or equal to the second threshold. The second threshold may be configured by the network. "The change in SINR is less than or equal to the third threshold" includes that a difference between two adjacent SINR values is less than or equal to the second threshold, or a change in SINR within a certain period of time is less than or equal to the third threshold. The third threshold may be configured by the network.

It should be noted that the UE may assess (or checks) the validity of the measurement results in different scenarios for different purposes. Specifically, Scenario 1: the UE performs validity assessment (or check) of measurement results before performing the first measurement (i.e., assessing the validity of the first result), to determine whether the first measurement needs to be performed. In this scenario, the UE performs a validity assessment on the existing idle-state/inactive-state measurement results, such as measurements for cell reselection, idle-state/inactive-state CA or DC measurements performed within duration of a timer. Scenario 2: the UE assesses (or checks) the validity of the measurement results after performing the first measurement, and the UE can report the validity information to the network, to provide more information to the network, thereby assisting the network in determining how to use the measurement results reported by the UE.

In some embodiments, the measurement results are invalid if at least one of the following conditions is met:
a time interval between a reporting time and a measurement instance exceeds a first time duration;
a change in RSRP is greater than or equal to a first threshold;
a change in RSRQ is greater than or equal to a second threshold;
a change in SINR is greater than or equal to a third threshold; or,
the measurement results do not meet measurement accuracy requirement.

In some embodiments, the method further includes:
receiving second information transmitted by the network, where the second information includes at least one of: a frequency, a cell identifier, an SSB index, an SSB period, or an SSB-based measurement timing configuration (SMTC) period for performing the first measurement.

As an example, the frequency, the cell identifier, the SSB index, the SSB period, and the SMTC period for performing the first measurement may indicate which frequencies, cells, and SSBs the UE performs the first measurement on, and the SSB period and the SMTC period adopted when performing the first measurement. The advantage is that, taking frequencies as an example, in the related technologies, the network may configure a larger number of frequencies for idle-state CA or DC measurements, or for cell reselection. However, since the first measurement is performed during the RRC connection setup/resume procedure, and this period of time is very short, the measurement of a large number of frequencies may not be completed (the measurement delay is related to the number of frequencies, and the more frequencies, the longer the time). This solution can reduce the number of frequencies at which the first measurement is made by explicitly indicating which specific frequency (or frequencies) the first measurement is made on, thereby reducing the measurement delay.

As an example, the frequency may be identified using an absolute radio frequency channel number (ARFCN).

In some embodiments, the method further includes: receiving third information transmitted by the network, the third information including at least one of: a frequency band in which the first measurement is to be performed; or a frequency (or frequencies) to be measured in the frequency band.

As an example, the first measurement is performed during the RRC connection setup/resume procedure, which is a very short period of time and may not be able to complete measurements at more frequency points. In order to reduce a delay of the first measurement, it can be achieved by reducing the number of frequency bands and the number of frequency points to be measured. When multiple frequency bands need to be measured, the network may instruct the UE on which frequency band(s) to perform the first measurement. In addition, one frequency band may include multiple frequency points, and in order to reduce the number of frequency points of the first measurement, the network may instruct the UE to measure only one frequency point in a frequency band, and to specify exactly which frequency point to measure. If there are multiple frequency bands, the frequencies at which the first measurement needs to be performed may be indicated for each frequency band.

In some embodiments, the method further includes: transmitting fourth information to the network, the fourth information including at least one of: a number of samples of the first measurement; or a number of samples of the first result.

As an example, the purpose of the first measurement is mainly to improve the validity and timeliness of the measurement results. However, since the first measurement is performed during the RRC connection setup/resume procedure, the period of time is short, and in order to standardize the measurement behavior of the UE and reduce the impact of the first measurement on the original connection setup/resume, the UE needs to notify the network of the number of samples actually needed. The number of samples of the first result is also reported in order to derive the number of samples required for the first measurement.

In some embodiments, the method further includes: transmitting fifth information to the network, the fifth information including indication information for performing the first measurement, the idle-state measurement, and the inactive-state measurement in the connected state.

As an example, the UE may notify the network whether the first measurement, the idle-state measurement, and the inactive-state measurement extend into (or continue into, or carried over into) the connected state through the fifth information. The fifth information may further include at least one of a frequency band, a frequency or a cell in which the first measurement is performed in the connected state.

Here, the UE transmits the fifth information to the network to indicate whether the first measurement extends into the connected state (or whether it affects a measurement in the connected state, i.e., a measurement of the MO configured by the network in the connected state).

The first measurement does not affect the measurement in the connected state if it does not extend into the connected state, e.g., the first measurement ends when the UE sends RRCResumeComplete or RRCSetupComplete, or upon receiving a first RRC reconfiguration message. If the first measurement can extend into the connected state, a relationship between the first measurement and the connected-state network-configured MO measurement needs to be considered.

In some embodiments, the continuing the first measurement, the idle-state measurement, and the inactive-state measurement in the connected state includes one of the following:
when the measurement object includes a frequency of the first measurement, the UE continues the first measurement in the connected state;
when the measurement object includes the frequency of the first measurement, the UE continues the idle-state CA or DC measurement in the connected state;
when the measurement object includes a frequency for cell reselection, the UE continues the idle-state measurement in the connected state; or,
when the measurement object includes the frequency for cell reselection, the UE continues the inactive-state measurement in the connected state.

As an example, continuing the first measurement, the idle-state measurement, and the inactive-state measurement in the connected state may also be described as performing the first measurement, the idle-state measurement, and the inactive-state measurement in the connected state, or as continuing to perform the first measurement, the idle-state measurement, and the inactive-state measurement in the connected state. This solution can improve the validity and timeliness of the measurement results.

In some embodiments, the transmitting the first information to the network includes one of the following: transmitting the first information during connection setup; transmitting the first information during connection resume; transmitting the first information in the connected state; or transmitting the first information after receiving information that the network requests the UE to report measurement results.

In some embodiments, the method further includes: receiving sixth information transmitted by the network, where the sixth information is used to indicate a resource allocation for the UE between the first measurement and a second measurement. The second measurement is a measurement performed by the UE in the connected state.

As an example, the sixth information may be a proportion or probability for the first measurement, or a proportion or probability for an MO measurement.

As an example, the second measurement may specifically be an MO measurement.

In some embodiments, the method further includes: transmitting seventh information to the network, the seventh information indicating at least one of the following: whether the UE supports a measurement during connection setup; whether the UE supports a measurement during connection resume; whether the UE supports a measurement after receiving a paging; whether the UE supports a measurement after transmitting a random access preamble; whether the UE supports a measurement before receiving a connection measurement configuration; whether the UE supports the continuing the first measurement, the idle-state measurement, and the inactive-state measurement in the connected state; or whether the UE supports measurement validation.

In some embodiments, the method further includes: reporting valid measurement results; where measurement results are valid when at least one of the following conditions is met: the measurement results satisfy measurement accuracy requirement; measurements are performed within a first duration before MSG1 transmission; a change in RSRP is less than or equal to a first threshold; a change in RSRQ is less than or equal to a second threshold; or, a change in SINR is less than or equal to a third threshold.

As an example, if a condition for determining that the measurement results are valid is not satisfied, the measurement results are considered invalid, and the UE shall not report the invalid measurement results. The first duration may be configured by the network, with possible values including at least one of 5 seconds, 10 seconds, 20 seconds, or 50 seconds. If the first duration is not configured by the network, the UE is not required to perform validity check. Measurement results satisfying the measurement accuracy requirement can also be described as that the measurement results satisfy the measurement accuracy requirement at the measurement instance, which is to distinguish from the UE reporting time and the network receiving time. Because it takes time for the UE to measure and report, and then for the network to receive the measurement results reported by the UE, as the UE moves, channel conditions are likely to change, and the UE can only ensure that the measurement results satisfy the measurement accuracy requirement at the measurement instance. The measurements performed within the first duration before MSG1 transmission may also be described as measurements performed within the first duration before MSG1 transmission for RRC resume/setup request. Since MSG1 carries a preamble, the MSG1 transmission can also be described as a preamble transmission.

As an example, the measurement results include at least one of the following: a result of the first measurement, a result of an idle-state/inactive-state measurement, or a measurement result of an early measurement. The first measurement may also be described as an enhanced measurement-based method, while the idle-state/inactive-state measurement and the early measurement may also be collectively described as an existing measurement-based method. Both the enhanced measurement-based method and the existing measurement-based method are for fast CA/DC setup. Different from the prior art, the results of the idle-state/inactive-state measurement do not need to be reported by the UE; however, the existing measurement method for fast CA/DC setup requires the UE to report the results of the idle-state and the inactive-state measurements.

Embodiments of the present disclosure have the following advantages:
(1) To address the problem of timeliness degradation of non-connected state measurements in the related art, the UE performs at least one of the following operations: performing a first measurement; continuing the first measurement, an idle-state measurement, and an inactive-state measurement in a connected state; or transmitting first information to the network.

First, the UE performs the first measurement. The first measurement may also be described as an enhanced measurement for SCell or SCG setup. The first measurement includes at least an additional measurement performed on top of the existing idle-state/inactive-state measurements made by the UE, which may enable the measurements to be performed closer to the timing of being used, thereby improving effectiveness.

Second, continuing the first measurement, the idle-state measurement, and the inactive-state measurement in the connected state can ensure the validity and timeliness of the measurements.

Third, transmitting the first information to the network to indicate whether the measurement results are valid during reporting or to report valid measurement results, thereby assisting the network in better utilizing the measurement results reported by the UE, and ensuring the validity and timeliness of the measurements.

Referring to FIG. 2, FIG. 2 is a schematic flowchart of another measurement method provided by an embodiment of the present disclosure, which is applied to a network device. The method includes an operation 201.

In 201: first information transmitted by a UE is received; where the first information includes at least one of: indication information of available measurement results; indication information of valid measurement results; a timestamp; or measurement results.

As an example, the UE sends the first information to the network to indicate whether the measurement results are valid during a reporting procedure or to report the valid measurement results, so as to assist the network in better utilizing the measurement results reported by the UE, thereby ensuring the validity and timeliness of the measurement.

As an example, the available measurements results may also be described as existence of measurement results. The indication information of the available measurement results may also be described as indication information indicating the existence of the measurement results, or as indication information indicating that the measurement results are/are not available. Considering factors such as channel state and reference signal strength, the UE may not be able to measure some frequencies/cells, or the measurement results may be low (for example, below a certain threshold). Through the indication information, the network can be assisted to know whether the UE has measurement results and which measurement results are available, so that the network can subsequently instruct the UE whether to report measurement results, configure resources for measurement reporting, and the like. Specifically, for example, a corresponding bit value of the indication information of the available measurement results is 1 or TRUE, which indicates that there are available measurement results. In other examples, the availability may be indicated per frequency (i.e., whether a measurement result is available for each frequency), the availability may be indicated per cell (i.e., whether a measurement result is available for each cell), the availability of a measurement result for multiple frequencies may be indicated by one bit, or the availability of measurement results for multiple cells may be indicated by one bit.

As an example, the indication information of the valid measurement results may also be described as information indicating that the measurement results are valid, or as information indicating whether the measurement results are valid.

Here, considering that there may be a certain time interval between the UE performing the measurements and reporting the measurement results, which is likely to cause the measurement results to be invalidated, the present disclosure can assist the network to know whether the measurement results reported by the UE are valid by introducing indication information of the valid measurement results, so as to facilitate subsequent determination of whether to use the reported measurement results for SCell/SCG configuration. Specifically, for example, the corresponding bit value of the indication information of the valid measurement results is 1 or TRUE, which indicates that the measurement results are valid. In other examples, the validity may be indicated per frequency (i.e., whether or not the measurement result for each frequency is valid), the validity may be indicated per cell (i.e., whether or not the measurement result for each cell is valid), the validity of measurement results of multiple frequencies may be indicated by one bit, or the validity of measurement results of multiple cells may be indicated by one bit.

As an example, the timestamp is a timestamp of a measurement result, or is described as an indication of when the measurement result is measured when the UE reports the measurement result, so as to facilitate the network to determine whether the reported measurement result is valid and available.

As an example, the measurement results include at least one of RSRP, RSRQ, or SINR. The measurement results in an embodiment of the present disclosure include at least one of a measurement result of the first measurement or a first result, the first result including measurement results in idle state and/or inactive state, such as a measurement result for cell reselection, a measurement result for CA/DC (e.g. measurement report for fast CA/DC setup), or the like.

In some embodiments, the method further includes: transmitting second information to the UE, the second information including at least one of a frequency, a cell identifier, an SSB index, an SSB period, or an SMTC period for performing the first measurement.

As an example, the frequency, the cell identifier, the SSB index, the SSB period, a the SMTC period for performing the first measurement may indicate which frequencies, cells, and SSBs the UE performs the first measurement, and the SSB period and the SMTC period adopted when performing the first measurement. The advantage is that, taking frequencies as an example, in the related technologies, the network may configure a large number of frequencies for idle-state CA or DC measurement, or for cell reselection. However, the first measurement is performed during the RRC connection setup/resume procedure, and this period of time is very short, and the measurement of more frequencies may not be completed (the measurement delay is related to the number of frequencies, and the more frequencies, the longer the time). This solution can reduce the number of frequencies at which the first measurement is performed by explicitly indicating which frequency (or frequencies) the first measurement is made, thereby reducing the measurement delay.

As an example, the frequency may be identified using an absolute radio frequency channel number (ARFCN).

In some embodiments, the method further includes: transmitting third information to the UE, the third information including at least one of: a frequency band in which the first measurement is to be performed; or a frequency to be measured in the frequency band.

As an example, the first measurement is performed during the RRC connection setup/resume procedure, this period of time is very short, and the measurement of more frequencies may not be completed. In order to reduce the time delay of the first measurement, it can be achieved by reducing the number of frequency bands and the number of frequencies to be measured. When there are multiple frequency bands to be measured, the network may instruct the UE on which frequency band(s) to perform the first measurement. In addition, multiple frequencies may be included in one frequency band, and in order to reduce the number of frequencies of the first measurement, the UE may be instructed to measure only one frequency in a frequency band; further, which frequency to be measured will be further indicated explicitly. If there are multiple frequency bands, the frequencies at which the first measurement is required to be performed may be indicated for each frequency band (i.e., indicated per frequency band).

In some embodiments, the method further includes: receiving fourth information transmitted by the UE, the fourth information including at least one of: a number of samples of the first measurement; or, a number of samples of the first result.

As an example, the purpose of the first measurement is mainly to improve the validity and timeliness of the measurement results. However, since the first measurement is performed during the RRC setup/resume procedure, the period of time is short, and in order to standardize the measurement behavior of the UE and reduce the influence of the first measurement on the original connection setup/resume, the UE needs to notify the network of the number of samples actually needed. The number of samples of the first result is also reported in order to derive the number of samples required for the first measurement.

In some embodiments, the method further includes: receiving fifth information transmitted by the UE, the fifth information including indication information that the first measurement, the idle-state measurement, and the inactive-state measurement are performed in a connected state.

As an example, the UE may notify the network whether the first measurement, the idle-state measurement, and the inactive-state measurement extend into the connected state through the fifth information. The fifth information may further include at least one of a frequency band, a frequency, or a cell in which the first measurement is performed in the connected state.

Here, the UE sends the fifth information to the network to indicate whether the first measurement continues into the connected state (or whether it affects a measurement in the connected state, i.e., a measurement of the MO configured by the network in the connected state).

The first measurement does not affect the measurement of the connected state if it does not continue into the connected state, e.g., the first measurement ends when the UE sends RRCResumeComplete or RRCSetupComplete, or upon receiving a first RRC reconfiguration message by the UE. If the first measurement can extend into the connected state, the relationship between the first measurement and the measurement of the measurement object (MO) in the connected state configured by the network needs to be considered.

In some embodiments, the operation of receiving the first information transmitted by the UE includes one of the following: receiving the first information during connection setup; receiving the first information during connection resume; receiving the first information in the connected state; receiving the first information after the UE receives information that a network requests the UE to transmit measurement results.

In some embodiments, the method further includes: transmitting sixth information to the UE; the sixth information is used to indicate a resource allocation for the UE between the first measurement and a second measurement; the second measurement is a measurement performed by the UE in the connected state.

As an example, the sixth information may be a proportion or probability for the first measurement, or a proportion or probability for an MO measurement.

As an example, the second measurement may specifically be an MO measurement.

In some embodiments, the method further includes: receiving seventh information transmitted by the UE, the seventh information indicating at least one of: whether the UE supports a measurement during connection setup; whether the UE supports a measurement during connection resume; whether the UE supports a measurement after receiving a paging; whether the UE supports a measurement after transmitting a random access preamble whether the UE supports a measurement before receiving a connection measurement configuration; whether the UE supports continuing the first measurement, the idle-state measurement, and the inactive-state measurement in the connected state; or, whether the UE supports measurement validation. In embodiments of the present disclosure, the measurement validation may also be described as measurement validity verification, or as measurement validity check.

In some embodiments, the method further includes: receiving valid measurement results; where the measurement results are valid when at least one of the following conditions is satisfied: the measurement results satisfy measurement accuracy requirement; the measurements are performed within a first duration before MSG1 transmission; a change in reference signal received power (RSRP) is less than or equal to a first threshold; a change in reference signal received quality (RSRQ) is less than or equal to a second threshold; or, a change of signal to interference plus noise ratio (SINR) is less than or equal to a third threshold.

As an example, if a condition for determining that the measurement results are valid is not satisfied, the measurement results are considered invalid, and the UE does not report the invalid measurement results when the first duration is configured. The first duration may be network-configured, and the value of the first duration includes at least one of 5 seconds, 10 seconds, 20 seconds, or 50 seconds. If the first duration is not configured by the network, the UE may not perform a validity check. Measurement results satisfying the measurement accuracy requirement can also be described as that the measurement results satisfy the measurement accuracy requirement at the measurement instance, which is to distinguish from the UE reporting time and the network receiving time. Because it takes time for the UE to measure and report, and then for the network to receive the measurement results reported by the UE, as the UE moves, channel conditions are likely to change, and the UE can only ensure that the measurement results satisfy the measurement accuracy requirement at the measurement instance. The measurement performed within the first duration before MSG1 transmission may also be described as a measurement performed within the first duration before MSG1 transmission for RRC resume/setup request. Since the MSG1 carries a preamble, the MSG1 transmission can also be described as a preamble transmission.

As an example, the measurement results include at least one of the following: a result of the first measurement, a result of an idle-state/inactive-state measurement, or a measurement result of an early measurement. The first measurement may also be described as an enhanced measurement-based method, while the idle-state/inactive-state measurement and the early measurement may also be collectively described as an existing measurement-based method. Both the enhanced measurement-based method and the existing measurement-based method are for fast CA/DC setup. Different from the prior art, the results of the idle-state/inactive-state measurement do not need to be reported by the UE, but the existing measurement-based method for fast CA/DC setup requires the UE to report the measurement results of the idle-state and the inactive-state measurement.

Embodiments of the present disclosure have the following advantages:
(1) To address the problem of timeliness degradation in the measurement of the non-connected state in the related art, the UE performs at least one of the following operations: performing a first measurement; continuing the first measurement, an idle-state measurement, and an inactive-state measurement in a connected state; or transmitting first information to a network.

First, the UE performs the first measurement. The first measurement may also be described as an enhanced measurement for SCell or SCG setup. The first measurement includes at least an additional measurement based on the existing idle-state/inactive state measurements made by the UE, which may enable the measurement to be closer to the timing of being used, thereby improving effectiveness.

Secondly, continuing the first measurement, the idle-state measurement, and the inactive-state measurement in the connected state can ensure the validity and timeliness of the measurement.

Thirdly, transmitting the first information to the network to indicate whether the measurement results are valid or to report valid measurement results in the reporting procedure, thereby assisting the network to better utilize the measurement results reported by the UE, and ensuring the validity and timeliness of the measurements.

In order to realize the measurement method of the embodiment of the present disclosure, an embodiment of the present disclosure also provides a measurement apparatus, which is arranged at a UE. FIG. 3 is a schematic structural diagram of a measurement apparatus according to an embodiment of the present disclosure. As shown in FIG. 3, the apparatus includes a processing module 31.

The processing module 31 is configured to perform at least one of the following operations: performing a first measurement; continuing the first measurement, an idle-state measurement, and an inactive-state measurement in a connected state; or transmitting first information to a network.

The first measurement includes at least one of the following: a measurement during connection setup; a measurement during connection resume; a measurement after receiving a paging; a measurement after transmitting a random access preamble; a measurement before receiving a connection measurement configuration; an inter-frequency measurement; an inter-RAT measurement; or a measurement of a measurement object (MO). The first information includes at least one of: indication information of available measurement results; indication information of valid measurement results; a timestamp; or measurement results.

In some embodiments, the processing module 31 is configured to perform the first measurement when at least one of the following conditions is satisfied: a first result is invalid; or, second information transmitted by the network instructs the UE to perform the first measurement.

In some embodiments, the first result includes: a result of a measurement for cell reselection; and a result of an idle-state CA or DC measurement.

In some embodiments, the measurement results are valid if at least one of the following conditions is met: the measurements are performed within a first duration before reporting; the measurements are performed within a first duration before MSG1 transmission; a change in RSRP is less than or equal to a first threshold; a change in RSRQ is less than or equal to a second threshold; a change in SINR is less than or equal to a third threshold; or, the measurement results satisfy measurement accuracy requirement.

In some embodiments, the measurement results are invalid if at least one of the following conditions is met: a time interval between reporting and measuring exceeds the first duration; the change in RSRP is greater than or equal to the first threshold; the change in RSRQ is greater than or equal to the second threshold; the change in SINR is greater than or equal to the third threshold; or, the measurement results do not satisfy the measurement accuracy requirement.

In some embodiments, the apparatus is further configured to receive second information transmitted by the network, the second information including at least one of a frequency, a cell identifier, an SSB index, an SSB period, or an SSB-based measurement timing configuration (SMTC) period for performing the first measurement.

In some embodiments, the apparatus is further configured to receive third information transmitted by the network, the third information including at least one of: a frequency band in which the first measurement is to be performed; or a frequency to be measured in the frequency band.

In some embodiments, the apparatus is further configured to transmit fourth information to the network, the fourth information including at least one of: a number of samples of the first measurement; or, a number of samples of the first result.

In some embodiments, the apparatus is further configured to transmit fifth information to the network, the fifth information including indication information that the first measurement, the idle-state measurement, and the inactive-state measurement are performed in a connected state.

In some embodiments, the processing module 31 is configured to perform one of the following: when the measurement object includes a frequency of the first measurement, the UE continues the first measurement in a connected state; when the measurement object includes the frequency of the first measurement, the UE continues the idle-state CA or DC measurement in the connected state; when the measurement object includes a frequency for cell reselection, the UE continues the idle-state measurement in the connected state; or, when the measurement object includes the frequency for cell reselection, the UE continues the inactive-state measurement in the connected state.

In some embodiments, the processing module 31 is configured to perform one of the following: transmitting the first information during connection setup; transmitting the first information during connection resume; transmitting the first information in a connected state; transmitting the first information after receiving information that the network requests the UE to transmit the measurement results.

In some embodiments, the apparatus is further configured to: receive sixth information transmitted by the network; the sixth information is used to indicate a resource allocation for the UE between the first measurement and a second measurement; the second measurement is a measurement performed by the UE in a connected state.

In some embodiments, the apparatus is further configured to: transmit seventh information to the network, the seventh information indicating at least one of the following: whether the UE supports a measurement during connection setup; whether the UE supports a measurement during connection resume; whether the UE supports a measurement after receiving a paging; whether the UE supports a measurement after transmitting a random access preamble; whether the UE supports a measurement before receiving a connection measurement configuration; whether the UE supports the continuing the first measurement, the idle-state measurement, and the inactive-state measurement in the connected state; or, whether the UE supports measurement validation.

In some embodiments, the apparatus is further configured to: report valid measurement results; where the measurement results are valid when at least one of the following conditions is satisfied: the measurement results satisfy measurement accuracy requirement; the measurements are performed within a first duration before MSG1 transmission; a change in RSRP is less than or equal to a first threshold; a change in RSRQ is less than or equal to a second threshold; or, a change in SINR is less than or equal to a third threshold.

In practical application, the processing module 31 may be implemented by a processor in the measurement apparatus.

When the measurement apparatus provided in the above embodiment performs measurements, only the division of the above-described program modules is used as an example, but in practical application, the above-described processing may be allocated to be completed by different program modules as necessary, that is, the internal structure of the apparatus may be divided into different program modules to complete all or part of the above-described processing. In addition, the measurement apparatus provided by the above embodiment belongs to the same concept as the measurement method embodiment, and the specific implementation process thereof is detailed in the method embodiment, which will not be described again here.

In order to realize the measurement method of the embodiment of the present disclosure, an embodiment of the present disclosure also provides a measurement apparatus, which is arranged in a network device. FIG. 4 is a schematic structure diagram of a measurement apparatus according to an embodiment of the present disclosure. As shown in FIG. 4, the apparatus includes: a receiving module 41, configured to receive first information transmitted by a UE.

The first information includes at least one of: indication information of available measurement results; indication information of valid measurement results; a timestamp; or, measurement results.

In some embodiments, the apparatus is further configured to transmit second information to the UE, the second information including at least one of a frequency, a cell identifier, an SSB index, an SSB period, or an SMTC period for performing the first measurement.

In some embodiments, the apparatus is further configured to transmit third information to the UE, the third information including at least one of the following: a frequency band in which the first measurement is to be performed; or a frequency to be measured in the frequency band.

In some embodiments, the apparatus is further configured to receive fourth information transmitted by the UE, the fourth information including at least one of the following: a number of samples of the first measurement; or, a number of samples of a first result.

In some embodiments, the apparatus is further configured to: receive fifth information sent by the UE, the fifth information including indication information that the first measurement, the idle-state measurement, and the inactive-state measurement are performed in a connected state.

In some embodiments, the receiving module 41 is configured to perform one of the following operations: receiving the first information during connection setup; receiving the first information during connection resume; receiving the first information in a connected state; receiving the first information after the UE receives information that a network requests the UE to transmit measurement results.

In some embodiments, the apparatus is further configured to: transmit sixth information to the UE; the sixth information is used to indicate a resource allocation for the UE between the first measurement and a second measurement; the second measurement is a measurement performed by the UE in a connected state.

In some embodiments, the apparatus is further configured to: receive seventh information transmitted by the UE, the seventh information indicating at least one of: whether the UE supports a measurement during connection setup; whether the UE supports a measurement during connection resume; whether the UE supports a measurement after receiving a paging; whether the UE supports a measurement after transmitting a random access preamble; whether the UE supports a measurement before receiving a connection measurement configuration; whether the UE supports continuing the first measurement, the idle-state measurement, and the inactive-state measurement in the connected state; or whether the UE supports measurement validation.

In some embodiments, the apparatus is further configured to: receive valid measurement results; where the measurement results are valid when at least one of the following conditions is satisfied: the measurement result satisfy measurement accuracy requirement; the measurements are performed within a first duration before MSG1 transmission; a change in RSRP is less than or equal to a first threshold; a change in RSRQ is less than or equal to a second threshold; or, a change in SINR is less than or equal to a third threshold.

In practical application, the receiving module 41 may be implemented by a communication interface in a measurement apparatus.

When the measurement apparatus provided in the above embodiment performs measurements, only the division of the above-described program modules is used as an example, but in practical application, the above-described processing may be allocated to be completed by different program modules as necessary, that is, the internal structure of the device may be divided into different program modules to complete all or part of the above-described processing. In addition, the measurement apparatus provided by the above embodiment belongs to the same concept as the measurement method embodiment, and the specific implementation process thereof is detailed in the method embodiment, which will not be described again here.

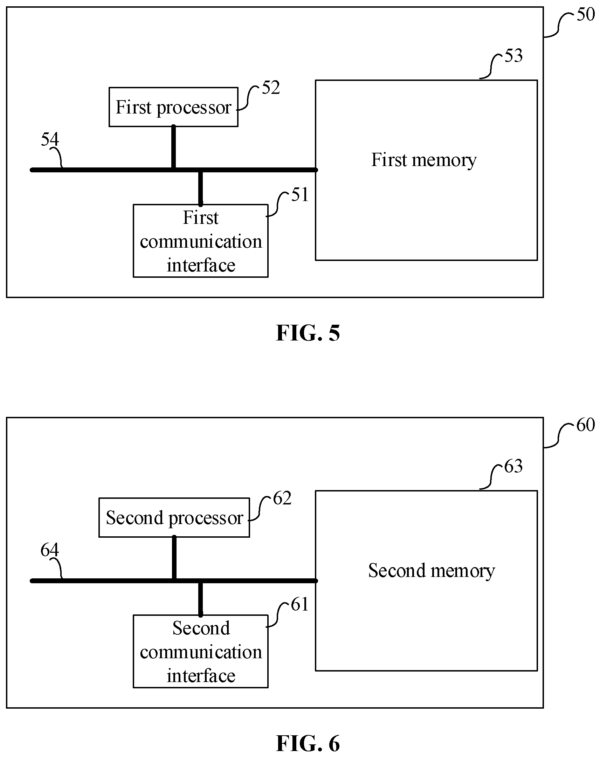

An embodiment of the present disclosure also provides a UE, as shown in FIG. 5, the UE incudes a first communication interface 51 and a first processor 52.

The first communication interface 51 is capable of interacting with other UEs.

The first processor 52 is connected with the first communication interface 51, and is configured to execute the method provided by one or more technical solutions on the UE side when running a computer program. The computer program is stored in a first memory 53.

It should be noted that the specific processing processes of the first processor 52 and the first communication interface 51 are detailed in the method embodiment, and will not be described again here.

Of course, in practical application, the various components in the UE 50 are coupled together by the bus system 54. It will be appreciated that the bus system 54 is used to enable connected communication between these components. The bus system 54 includes a power bus, a control bus, and a status signal bus in addition to a data bus. However, for clarity of explanation, the various buses are designated as bus systems 54 in FIG. 5.

The first memory 53 in the embodiment of the present disclosure is used to store various types of data to support the operation of the UE 50. Examples of such data include any computer program for operation on the UE 50.

The method disclosed in the above-described embodiment of the present disclosure may be applied to or implemented by the first processor 52. The first processor 52 may be an integrated circuit chip with signal processing capability. In an implementation process, each step of the method described above may be completed by hardware integrated logic circuitry in the first processor 52 or instructions in the form of software. The first processor 52 described above may be a general-purpose processor, a digital data processor (DSP), another programmable logic device, a discrete gate, a transistor logic device, a discrete hardware component, or the like. The first processor 52 may implement or execute the methods, steps, and logic block diagrams disclosed in the embodiments of the present disclosure. The general purpose processor may be a microprocessor or any conventional processor or the like. The steps of the method disclosed in connection with the embodiments of the present disclosure can be directly embodied as being executed by a hardware decoding processor, or executed by a combination of hardware in the decoding processor and software modules. The software module may be located in a storage medium located in the first memory 53, and the first processor 52 reads the information from the first memory 53 and completes the steps of the aforementioned method in conjunction with its hardware.

An embodiment of the present disclosure also provides a network device, as shown in FIG. 6, the network device includes a second communication interface 61 and a second processor 62.

The second communication interface 61 is capable of interacting with other UEs.

The second processor 62 is connected with the second communication interface 61, and is configured to execute the method provided by one or more technical solutions on the network device side when running a computer program. The computer program is stored in a second memory 63.

It should be noted that the specific processing processes of the second processor 62 and the second communication interface 61 are detailed in the method embodiment, and will not be described again here.

Of course, in practical application, the various components in the network device 60 are coupled together by a bus system 64. It will be appreciated that the bus system 64 is used to enable connection and communication between these components. The bus system 64 includes a power bus, a control bus, and a status signal bus in addition to a data bus. However, for clarity of explanation, the various buses are designated as the bus system 64 in FIG. 6.

The second memory 63 in the embodiment of the present disclosure is used to store various types of data to support the operation of the network device 60. Examples of such data include any computer program for operating on network device 60.

The method disclosed in the above-described embodiment of the present disclosure may be applied to the second processor 62 or may be implemented by the second processor 62. The second processor 62 may be an integrated circuit chip with signal processing capability. In the implementation process, each step of the above method may be completed by an integrated logic circuit of hardware in the second processor 62 or instructions in the form of software. The second processor 62 may be a general-purpose processor, a digital data processor (DSP), another programmable logic device, a discrete gate, a transistor logic device, a discrete hardware component, or the like. The second processor 62 may implement or execute the methods, steps, and logic block diagrams disclosed in the embodiments of the present disclosure. The general purpose processor may be a microprocessor or any conventional processor or the like. The steps of the method disclosed in connection with the embodiments of the present disclosure may be directly embodied as being executed by a hardware decoding processor, or executed by a combination of hardware in the decoding processor and software modules. The software module may be located in a storage medium located in the second memory 63, and the second processor 62 reads the information from the second memory 63 and completes the steps of the aforementioned method in conjunction with its hardware.

In an exemplary embodiment, the UE 50, the network device 60 may be implemented by one or more application specific integrated circuits (ASICs), DSPs, programmable logic devices (PLDs), complex programmable logic devices (CPLDs), field-programmable gate arrays (FPGAs), general-purpose processors, controllers, microcontrollers (MCUs), microprocessors, or other electronic components for performing the aforementioned methods.

It will be understood that the memory (such as the first memory 53 and the second memory 63) of the embodiment of the present disclosure may be a volatile memory or a non-volatile memory, and may include both volatile memory and non-volatile memory. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk, or a CD-ROM (compact disc read-only memory). The magnetic surface memory may be a magnetic disk memory or a magnetic tape memory. The volatile memory may be a random access memory (RAM), which serves as an external cache. By way of example, but not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronously connect dynamic random access memory (SLDRAM) and direct memory bus random access memory (DRRAM). The memory described in embodiments of the present disclosure is intended to include, but is not limited to, these and any other suitable types of memory.

In an exemplary embodiment, an embodiment of the present disclosure also provides a storage medium, that is, a computer storage medium, specifically a computer-readable storage medium, for example, including a memory storing a computer program executable by the first processor 52 of the UE 50 to complete the steps described in the UE-side method. The computer-readable storage medium may be a memory such as FRAM, ROM, PROM, EPROM, EEPROM, Flash memory, magnetic surface memory, optical disk, or CD-ROM. In some embodiments, the computer-readable storage medium may be a non-transitory computer-readable storage medium.

It should be noted that "first", "second", and the like are used to distinguish similar objects, and are not necessarily used to describe a specific order or sequence. "A and/or B" in the present disclosure means that there are three situations between A and B: A and B are present simultaneously, A is present alone, and B is present alone.

In addition, the technical solutions described in the embodiments of the present disclosure may be arbitrarily combined unless there is no conflict. These technical solutions after any combination belong to the protection scope described in the present disclosure.

The above are only preferred embodiments of the present disclosure, and are not intended to limit the scope of protection of the present disclosure.

## Claims

1. A method for measurement, applied to a user equipment (UE), the method comprising:
performing at least one of the following operations:
performing a first measurement;
continuing the first measurement, an idle-state measurement, and an inactive-state measurement in a connected state; or
transmitting first information to a network;
wherein the first measurement comprises at least one of the following:
a measurement during connection setup;
a measurement during connection resume;
a measurement after receiving a paging;
a measurement after transmitting a random access preamble;
a measurement before receiving a connection measurement configuration;
an inter-frequency measurement;
an inter-radio access technology (inter-RAT) measurement; or
a measurement of a measurement object (MO);
wherein the first information comprises at least one of the following:
indication information of available measurement results;
indication information of valid measurement results;
a timestamp; or
measurement results.

2. The method of claim 1, wherein performing the first measurement comprises:
performing the first measurement if at least one of the following conditions is met:
a first result is invalid; or
second information transmitted by the network instructs the UE to perform the first measurement.

3. The method of claim 2, wherein the first result comprises:
a result of a measurement for cell reselection; and
a result of an idle-state carrier-aggregation (CA) or dual-connectivity (DC) measurement.

4. The method of claim 1, wherein the measurement results are valid if at least one of the following conditions is met:
the measurements are performed within a first duration before reporting;
the measurements are performed within the first duration before MSG1 transmission;
a change in reference-signal-received-power (RSRP) is less than or equal to a first threshold;
a change in reference-signal-received-quality (RSRQ) is less than or equal to a second threshold;
a change in signal-to-interference-plus-noise ratio (SINR) is less than or equal to a third threshold; or
the measurement results satisfy measurement accuracy requirement.

5. The method of claim 1, wherein the measurement results are invalid if at least one of the following conditions is met:
a time interval between reporting and measurement exceeds a first duration;
a change in RSRP is greater than or equal to a first threshold;
a change in RSRQ is greater than or equal to a second threshold;
a change in SINR is greater than or equal to a third threshold; or
the measurement results do not satisfy measurement accuracy requirement.

6. The method of claim 1, further comprising:
receiving second information transmitted by the network, wherein the second information comprises at least one of a frequency, a cell identifier, a synchronization signal block (SSB) index, an SSB period, or an SSB-based measurement timing configuration (SMTC) period for performing the first measurement.

7. The method of claim 1, further comprising:
receiving third information transmitted by the network, wherein the third information comprises at least one of the following:
a frequency band in which the first measurement is to be performed; or
frequencies to be measured in the frequency band.

8. The method of claim 2, further comprising:
transmitting fourth information to the network, wherein the fourth information comprises at least one of: a number of samples of the first measurement; or a number of samples of a first result.

9. The method of claim 1, further comprising:
transmitting fifth information to the network, wherein the fifth information comprises indication information for performing the first measurement, the idle-state measurement, and the inactive-state measurement in the connected state.

10. The method of claim 1, wherein continuing the first measurement, the idle-state measurement, and the inactive-state measurement in the connected state comprises one of the following:
when the MO comprises a frequency of the first measurement, continuing, by the UE, the first measurement in the connected state;
when the MO comprises a frequency of the first measurement, continuing, by the UE, an idle-state CA or DC measurement in the connected state;
when the MO comprises a frequency for cell reselection, continuing, by the UE, the idle-state measurement in the connected state; or
when the MO comprises a frequency for cell reselection, continuing, by the UE, the inactive-state measurement in the connected state.

11. The method of claim 1, wherein transmitting the first information to the network comprises one of the following:
transmitting the first information during connection setup;
transmitting the first information during connection resume;
transmitting the first information in the connected state; or
transmitting the first information after receiving information that the network requests the UE to report the measurement results.

12. The method of claim 1, further comprising:
receiving sixth information transmitted by the network, wherein the sixth information is used to indicate a resource allocation for the UE between the first measurement and a second measurement performed by the UE in the connected state.

13. The method of claim 1, further comprising:
transmitting seventh information to the network, wherein the seventh information indicates at least one of the following:
whether the UE supports the measurement during connection setup;
whether the UE supports the measurement during connection resume;
whether the UE supports the measurement after receiving the paging;
whether the UE supports the measurement after transmitting the random access preamble;
whether the UE supports the measurement before receiving the connection measurement configuration;
whether the UE supports continuing the first measurement, the idle-state measurement, and the inactive-state measurement in the connected state; or
whether the UE supports measurement validation.

14. The method of claim 1, further comprising:
reporting the valid measurement results;
wherein the measurement results are valid if at least one of the following conditions is met:
the measurement results satisfy measurement accuracy requirement;
the measurements are performed within a first duration before MSG1 transmission;
a change in RSRP is less than or equal to a first threshold;
a change in RSRQ is less than or equal to a second threshold; or
a change in SINR is less than or equal to a third threshold.

15. A method for measurement, applied to a network device, the method comprising:
receiving first information transmitted by a user equipment (UE);
wherein the first information comprises at least one of the following:
indication information of available measurement results;
indication information of valid measurement results;
a timestamp; or
measurement results.

16. The method of claim 15, further comprising:
transmitting second information to the UE, wherein the second information comprises at least one of a frequency, a cell identifier, a synchronization signal block (SSB) index, an SSB period, or an SSB-based measurement timing configuration (SMTC) period for performing a first measurement.

17. The method of claim 15, further comprising:
transmitting third information to the UE, wherein the third information comprises at least one of the following:
a frequency band in which a first measurement is to be performed; or
frequencies to be measured in the frequency band.

18. The method of claim 15, further comprising:
receiving fourth information transmitted by the UE, wherein the fourth information comprises at least one of a sample number of a first measurement and a sample number of a first result.

19. The method of claim 15, further comprising:
receiving fifth information transmitted by the UE, wherein the fifth information comprises indication information for performing a first measurement, an idle-state measurement, and an inactive-state measurement in a connected state.

20. The method of claim 15, wherein receiving the first information transmitted by the UE comprises one of the following:
receiving the first information during connection setup;
receiving the first information during connection resume;
receiving the first information in a connected state; or
receiving the first information after the UE receives information that a network requests the UE to report the measurement results.

21. The method of claim 15, further comprising:
transmitting sixth information to the UE, wherein the sixth information is used to indicate a resource allocation for the UE between a first measurement and a second measurement performed by the UE in a connected state.

22. The method of claim 15, further comprising:
receiving seventh information transmitted by the UE, wherein the seventh information indicates at least one of the following:
whether the UE supports a measurement during connection setup;
whether the UE supports a measurement during connection resume;
whether the UE supports a measurement after receiving a paging;
whether the UE supports a measurement after transmitting a random access preamble;
whether the UE supports a measurement before receiving a connection measurement configuration;
whether the UE supports continuing a first measurement, an idle-state measurement and an inactive-state measurement in a connected state; or
whether the UE supports measurement validation.

23. The method of claim 15, further comprising:
receiving the valid measurement results;
wherein the measurement results are valid if at least one of the following conditions is met:
the measurement results satisfy measurement accuracy requirement;
measurements are performed within a first duration before MSG1 transmission;
a change in reference-signal-received-power (RSRP) is less than or equal to a first threshold;
a change in reference-signal-received-quality (RSRQ) is less than or equal to a second threshold; or
a change in signal-to-interference-plus-noise ratio (SINR) is less than or equal to a third threshold.

24. A measurement apparatus, comprising:
a processing module, configured to perform at least one of the following operations:
performing a first measurement;
continuing the first measurement, an idle-state measurement, and an inactive-state measurement in a connected state; or
transmitting first information to a network;
wherein the first measurement comprises at least one of the following:
a measurement during connection setup;
a measurement during connection resume;
a measurement after receiving a paging;
a measurement after transmitting a random access preamble;
a measurement before receiving a connection measurement configuration;
an inter-frequency measurement;
an inter-radio access technology (inter-RAT) measurement; or
a measurement of a measurement object (MO);
wherein the first information comprises at least one of the following:
indication information of available measurement results;
indication information of valid measurement results;
a timestamp; or
measurement results.

25. A measurement apparatus, comprising:
a receiving module, configured to receive first information transmitted by a user equipment (UE);
wherein the first information comprises at least one of the following:
indication information of available measurement results;
indication information of valid measurement results;
a timestamp; or
measurement results.

26. A user equipment (UE), comprising:
a processor; and
a memory for storing a computer program executable by the processor,
wherein the processor is configured to perform the method of any one of claims 1 to 14 when executing the computer program.

27. A network device, comprising:
a processor; and
a memory for storing a computer program executable by the processor,
wherein the processor is configured to perform the method of any one of claims 15 to 23 when executing the computer program.

28. A computer-readable storage medium having stored thereon a computer program that, when executed by a processor, implements the method of any one of claims 1 to 14, or implements the method of any one of claims 15 to 23.

29. A computer program product comprising a computer program that, when executed by a processor, implements the method of any one of claims 1 to 14, or implements the method of any one of claims 15 to 23.
